# EUROPÄISCHE PATENTSCHRIFT

(11) **EP 0 990 334 B1**
(45) Veröffentlichungstag und Bekanntmachung des Hinweises auf die Patenterteilung: **16.04.2003**
(21) Anmeldenummer: 98936177.9
(22) Anmeldetag: 16.06.1998
(51) Int. Cl.: H04L 27/26

(54) **DATENÜBERTRAGUNGSVERFAHREN MIT EINER MEHRZAHL VON NICHT-ÄQUIDISTANTEN FREQUENZBÄNDERN**
METHOD FOR TRANSFERRING DATA WITH A PLURALITY OF NON-EQUIDISTANT FREQUENCY BANDS
PROCEDE DE TRANSMISSION DE DONNEES AU MOYEN D'UNE PLURALITE DE BANDES DE FREQUENCES NON EQUIDISTANTES

(30) Priorität: 20.06.1997 DE 19726318
(43) Veröffentlichungstag der Anmeldung: 05.04.2000
(73) Patentinhaber: Infineon Technologies AG, 81669 München (DE)
(72) Erfinder: SCHENK, Heinrich, D-81476 München (DE); SCHENK, Martin, D-80798 München (DE)
(74) Vertreter: Reinhard - Skuhra - Weise & Partner
(86) Internationale Anmeldenummer: DE9801632
(87) Internationale Veröffentlichungsnummer: WO98059474

(56) Entgegenhaltungen:
- EP-A- 0 729 250
- EP-A- 0 772 330
- DE-A- 19 528 068
- US-A- 4 621 355
- US-A- 5 228 025

## Beschreibung

Die vorliegende Erfindung bezieht sich auf ein Datenübertragungsverfahren, bei dem die zu übertragenden Daten in mehrere Teilkanäle aufgeteilt und in verschiedenen Frequenzbändern übertragen werden, die in Frequenzabständen voneinander angeordnet werden.

Derartige Datenübertragungsverfahren sind beispielsweise Mehrfrequenzverfahren und Multitonverfahren. Solche Verfahren sind grundsätzlich bekannt und durch den sogenannten ADSL-Standard (Asymmetric Digital Subscriber Line, ANSI TI 413-1995) festgelegt.

Die EP 0729250 A2 beschreibt ein OFDM-Übertragungssystem, bei dem Referenzfrequenzsymbole über nicht äquidistant angeordnete Trägerfrequenzen übertragen werden.

Die US-A-5228025 beschreibt ein Sendeverfahren für Digitalsignale, und insbesondere ein COFDM-Verfahren, bei dem nicht konstante Abstände zwischen den Referenzfrequenzträgern eingesetzt werden.

Wesentlich an allen diesen bisher verwendeten Verfahren ist nun, daß die Frequenzabstände der einzelnen Teilkanäle, ab dem Wert Null beginnend, äquidistant aufgeteilt sind und einen Frequenzabstand von über 1/T aufweisen, wobei 1/T die sogenannte Schrittgeschwindigkeit bedeutet und T die Symboldauer des Datenübertragungssystems, also beispielsweise die Bitdauer, ist.

Wird bei solchen Datenübertragungsverfahren die Anzahl der Teilkanäle durch eine Potenz von 2 vorgegeben, so kann sendeund auch empfangsseitig ein IFFT-(Inverse schnelle FourierTransformation) bzw. ein FFT-(Schnelle Fourier-Transformation) Algorithmus für die Filterung herangezogen werden, was insbesondere bei einer großen Anzahl von Teilkanälen eine erhebliche Verminderung von durchzuführenden Operationen, wie insbesondere Multiplikationen, erlaubt.

In der DE-A-195 28 068 ist ein Datenübertragungsverfahren mit einer Mehrzahl von Trägerschwingungen beschrieben, bei dem die Übertragung von Datensignalen nach dem Mehrfrequenz-QAM-prinzip erfolgt. Sendeseitig wird bei diesem Verfahren eine festgelegte Anzahl aufeinanderfolgender Datenbits jeweils in eine Mehrzahl von N-Bitgruppen unterteilt. Diese werden in einem der Schrittgeschwindigkeit fT der Datensignale entsprechenden Zeitraster abgetastet. Aus den Abtastwerten werden sodann Amplitudenwerte gewonnen, mit denen jeweils eine von zwei, den N-Bitgruppen zugeordneten orthogonalen Trägerschwingungen gleicher Frequenz moduliert wird. Der Frequenzabstand benachbarter Trägerschwingungen ist dabei - wie üblich - jeweils äquidistant und kleiner als die Schrittgeschwindigkeit festgelegt. Die daraus resultierenden Signale werden sodann additiv zu einem zu übertragenden Trägerschwingungs-Gemisch überlagert. Empfangsseitig wird das übertragene Trägerschwingungs-Gemisch zunächst selektiv für die einzelnen N-Bitgruppen gefiltert. Nach einer Abtastung im genannten Zeitraster werden dann die zu den N-Bitgruppen gehörenden Datenbits rückgewonnen.

Dieses bekannte Datenübertragungsverfahren, bei dem die Teilkanäle äquidistant, jedoch in einem Abstand von unter 1/T angeordnet sind, ist nur bei sehr rauscharmen Kanälen anwendbar.

Es ist **Aufgabe** der vorliegenden Erfindung, ein Datenübertragungsverfahren zu schaffen, das eine optimale Ausnutzung von Frequenzbändern erlaubt.

Diese Aufgabe wird durch ein Datenübertragungsverfahren mit den Merkmalen des Patentanspruchs 1 gelöst.

Die Erfindung schafft ein Datenübertragungsverfahren, bei dem die zu übertragenden Daten in mehrere Teilkanäle mit jeweils einer Normalkomponente sowie einer hierzu orthogonalen Quadraturkomponente aufgeteilt und in verschiedenen Frequenzbändern übertragen werden, die in Frequenzabständen voneinander angeordnet werden, wobei die Frequenzabstände individuell nicht-äquidistant gewählt werden, dadurch gekennzeichnet, dass empfangsseitig für jeden Teilkanal sowohl für den Normalzweig als auch für den Quadraturzweig ein Fehlersignal generiert und einem entsprechenden Empfangsfilter zugeführt wird.

Bei dem erfindungsgemäßen Datenübertragungsverfahren sind also in vollkommener Abkehr vom bisherigen Stand der Technik die Frequenzbänder nicht mehr äquidistant angeordnet sondern vielmehr individuell gewählt. Dabei kann beispielsweise das erste Frequenzband bei einer beliebigen unteren Grenzfrequenz beginnen. Auch können im Nutzbereich eines Datenübertragungssystems Lücken für beispielsweise anderweitig reservierte Frequenzbänder vorgesehen werden. So können beispielsweise Frequenzbänder für den Amateurfunk ausgespart werden.

Das erfindungsgemäße Datenübertragungsverfahren eignet sich besonders vorteilhaft für sogenannte VDSL-(Very high bitrate Digital Subscriber Line)Übertragungssysteme, mit dem Daten im Geschwindigkeitsbereich von etwa 30 Mbit/s im Teilnehmer-Anschlußbereich über eine Entfernung von höchstens etwa 500 bis 1000 m übertragen werden.

Das erfindungsgemäße Verfahren erlaubt eine optimale Anpassung an die unterschiedlichsten Forderungen hinsichtlich der Ausnutzung eines Frequenzbereiches. Auch ist der Aufwand für Sender und Empfänger nur von der Datenrate, der Anzahl der Teilkanäle und der Abtastfrequenz, die größer ist als die doppelte obere Grenzfrequenz des Übertragungssystems, und nicht von der individuellen Lage der einzelnen Teilbänder abhängig.

Bei dem erfindungsgemäßen Datenübertragungsverfahren ist es ohne weiteres möglich, bei Bedarf "Lücken" in einem gesamten Nutzbereich des Übertragungssystems vorzusehen, um so zuverlässig gegenseitige Beeinflussungen beispielsweise mit Amateurfunkbändern zu verhindern. Auch kann, wie bereits erläutert wurde, das erste Frequenzband entsprechend den praktischen Anforderungen oberhalb von gegebenenfalls vorhandenen, anderweitig genutzten Kanälen, beispielsweise einem Sprachkanal bis etwa 4 kHz, einem ISDN-Basisanschlußkanal bis etwa 100 bis 150 kHz, festgelegt werden.

Nachfolgend wird die Erfindung anhand der Zeichnungen näher erläutert. Es zeigen:
- Fig. 1: eine Schaltungsanordnung für ein Mehfrequenz-Übertragungssystem zur Durchführung des erfindungsgemäßen Verfahrens, und
- Fig. 2: eine Empfängerstruktur eines Mehrfrequenz-Übertragungssystems mit adaptiv einstellbaren Filterkoeffizienten.

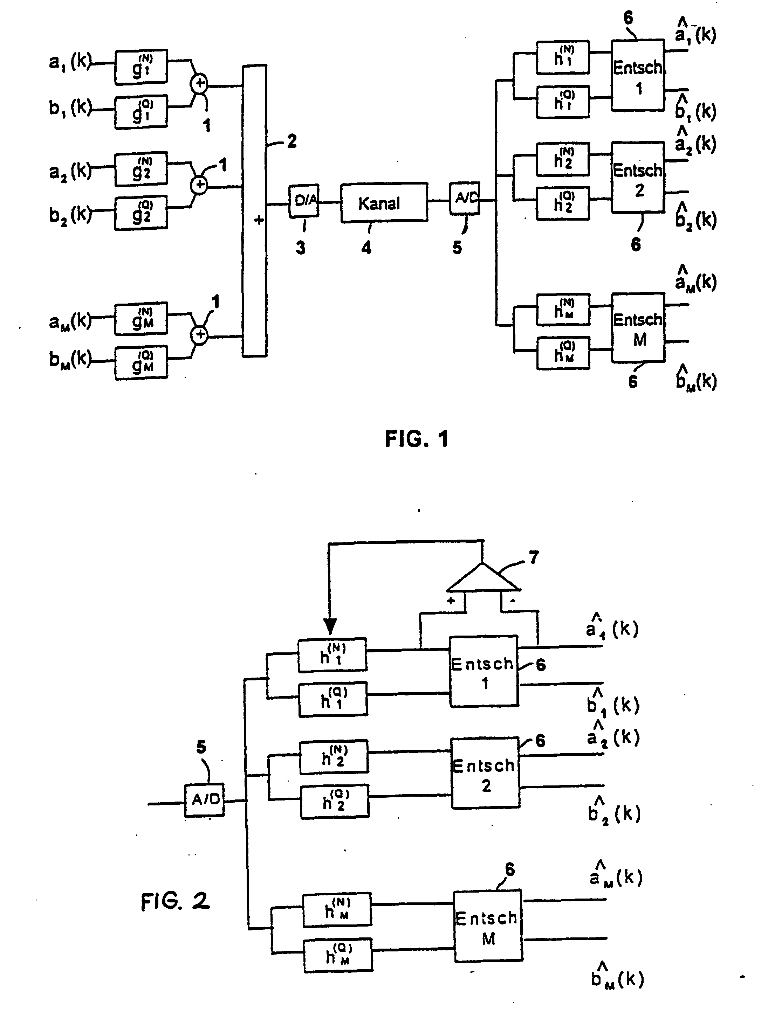

Fig. 1 zeigt den prinzipiellen Schaltungsaufbau für den Sender und den Empfänger eines Mehrkanal-Übertragungssystems, bei dem das erfindungsgemäße Verfahren anwendbar ist. In Fig. 1 sind Filterpaare g₁^{(N)}, g₁^{(Q)} bzw. g₂^{(N)}, g₂^{(Q)}, ..., g₁^{(N)}, g₁^{(Q)}, ..., g_{M}^{(N)}, g_{M}^{(Q)} sowie h₁^{(N)}, h₁^{(Q)} bzw. h₂^{(N)}, h₂^{(Q)}, ..., h₁^{(N)}, h₁^{(Q)}, ..., h_{M}^{(N)}, h_{M}^{(Q)} gezeigt, wobei jeweils ein Filterpaar für die Übertragung in einem Frequenzband vorgesehen ist. Der hochgestellte Index (N) bzw. (Q) bezeichnet dabei die Normalkomponente bzw. die hierzu orthogonale Quadraturkomponente. Auf der Senderseite sind dabei die Filterpaare gᵢ^{(N)} und gᵢ^{(Q)} vorgesehen, während auf der Empfangsseite die Filterpaare hᵢ^{(N)}, hᵢ^{(Q)} liegen. Den Sende-Filterpaaren gᵢ^{(N)}, gᵢ^{(Q)} werden Wertepaare a₁(k), b₁(k) bzw. a₂(k), b₂(k), ..., a_{M}(k), b_{M}(k) zugeführt, um Abtastwerte zu gewinnen, die ihrerseits in Summierern 1 bzw. 2 summiert und einem Digital/Analog-Umsetzer 3 zugeführt werden. Ein Übertragungskanal 4 verbindet den senderseitigen Digital/Analog-Umsetzer 3 mit einem empfängerseitigen Analog/Digital-Umsetzer 5, dem die bereits genannten Empfangsfilter h₁^{(N)}, h₁^{(Q)}, ..., h_{M}^{(N)}, h_{M}^{(Q)} nachgeschaltet sind. Diese Empfangsfilter stellen entsprechende Abtastwerte bereit, die sodann Entscheidern 6 zugeführt werden um die entsprechenden Empfangs-Wertepaare â₁(k), b̂₁(k), â₂(k), b̂₂(k); ... ; â_{M}(k), b̂_{M}(k) zu gewinnen. Dies ist beispielsweise in der bereits genannten DE-A-195 28 068 erläutert.

Wesentlich an der vorliegenden Erfindung ist nun, daß die Sendefilter gᵢ^{(N)}, gᵢ^{(Q)} so dimensioniert werden, daß ein vorgegebener Frequenzbereich optimal genutzt wird, was dadurch geschieht, daß die Frequenzabstände der einzelnen Teilfilter nicht mehr äquidistant über dem gesamten, verfügbaren Frequenzbereich aufgeteilt werden. Insbesondere kann dabei das erste Frequenzband entsprechend den praktischen Anforderungen oberhalb von gegebenenfalls vorhandenen, anderweitig genutzten Kanälen, beispielsweise einem Sprachkanal bis etwa 4 kHz, einem ISDN-Basisanschlußkanal bis etwa 100 bis 150 kHz gelegt werden. Auch können bei Bedarf sogenannte "Lücken" im gesamten Frequenzband vorgesehen werden, um gegenseitige Beeinflussungen durch beispielsweise Amateurfunkbänder zu vermeiden.

Der Empfangsteil kann, wie in Fig. 2 gezeigt ist, so erweitert werden, daß über jedem Entscheider 6 für jeden Teilkanal ein Fehlersignal sowohl für den Normalzweig (wie in Fig. 2 gezeigt) als auch für den Quadraturzweig generiert wird. Dadurch lassen sich die Koeffizienten der Empfangsfilter hᵢ automatisch bei Übertragung von digitalen Signalen einstellen. Dies ist insbesondere bei einem Einsatz des erfindungsgemäßen Verfahrens in Übertragungssystemen von Bedeutung, in denen die Eigenschaften des Übertragungskanals 4 nicht vollständig bekannt sind. Für die adaptive Einstellung der Empfangsfilterkoeffizienten kann beispielsweise das Kriterium des kleinsten quadratischen Fehlers angewandt werden (vergleiche beispielsweise Schenk, H.: Entwurf von Sende- und Empfangsfiltern für den Einsatz in digitalen Modems, AEÜ, Band 33, Heft 11, 1979, Seiten 425 - 431). Damit lassen sich optimal an den Übertragungskanal und die einzelnen Frequenzbänder angepaßte Teilfilter ermitteln.

Das über den einzelnen Entscheidern 6 abgegriffene Fehlersignal wird durch die entsprechenden Fehlerglieder 7 den jeweiligen Empfangsfiltern zugeführt, die mit Hilfe geeigneter Adaptionsalgorithmen die entsprechenden Filterkoeffizienten ermitteln. Dies ist bei einer geeigneten Dimensionierung der Sendefilter, bei der die genaue Lage der einzelnen Frequenzbänder festgelegt wird, ohne weiteres möglich.

## Patentansprüche

1. Datenübertragungsverfahren, bei dem die zu übertragenden Daten in mehrere Teilkanäle mit jeweils einer Normalkomponente sowie einer hierzu orthogonalen Quadraturkomponente aufgeteilt und in verschiedenen Frequenzbändern übertragen werden, die in Frequenzabständen voneinander angeordnet werden, wobei die Frequenzabstände individuell nicht-äquidistant gewählt werden,
**dadurch gekennzeichnet,**
**dass** empfangsseitig für jeden Teilkanal sowohl für den Normalzweig als auch für den Quadraturzweig ein Fehlersignal generiert und einem entsprechenden Empfangsfilter zugeführt wird.

## Claims

1. Data transmission method in which the data to be transmitted are divided up into a plurality of subchannels, in each case with a normal component and a quadrature component orthogonal thereto, and are transmitted in different frequency bands which are disposed with frequency intervals between them, whereby the frequency intervals are individually selected as non-equidistant,
**characterized in that**
an error signal is generated at the receiving end for each subchannel, for both the normal branch and the quadrature branch, and is fed to a corresponding receive filter.

## Revendications

1. Procédé de transmission des données, avec lequel les données à transmettre sont réparties dans plusieurs sous-canaux avec chaque fois un composant normal ainsi qu'un composant en quadrature, et transmises dans différentes bandes de fréquence qui sont disposées à des intervalles de fréquence les séparant les unes des autres, les intervalles de fréquence étant sélectionnés individuellement de façon non équidistante.
**caractérisé en ce que**
un signal d'erreur est généré côté réception pour chaque sous-canal à la fois pour la branche normale et pour la branche en quadrature, et délivré à un filtre de réception correspondant.
